# EUROPEAN PATENT APPLICATION

(11) **EP 2 618 065 A2**
(43) Date of publication of application: **24.07.2013**
(21) Application number: 13151532.2
(22) Date of filing: 16.01.2013
(51) Int. Cl.: F24D 13/02

(54) **Electric heating device and process for making an electric heating device**

(30) Priority: 16.01.2012 IT PD20120009
(71) Applicant: Elica Pod S.R.L., 30031 Dolo (VE) (IT)
(72) Inventor: Dal Martello, Ivano, 35020 Roncaglia di Ponte S. Nicolò (PD) (IT); Poletti, Mauro, 30031 Dolo (VE) (IT)
(74) Representative: Gallo, Luca

(57) **Abstract**

An electric heating device (10) and a process for making an electric heating device (10) which comprises
- a frame (11) able to be fixed to a support,
- a radiating plate (12) mechanically fixed to the frame (11) and equipped with a front face (12a) and a rear face (12b),
- at least one heating cable (13) mechanically fixed to the rear face (12b) of the radiating plate (12) to transmit heat to said radiating plate (12) by conduction,
- at least one thermally insulating layer (14) covering the rear face (12b), the heating cable (13) being arranged between the thermally insulating layer (14) and the radiating plate (12) and the thermally insulating layer (14) being able to counteract the dissipation of heat from the heating cable (13) behind the radiating plate (12),
- a flexible support (15) having a support face (15a) on which the heating cable (13) is fixed mechanically distributed and uniformly organised, the flexible support (15) having the support face (15a) mechanically fixed to the rear face (12b) of the radiating plate (12).

The frame (11) comprises a cover (16) sealably mechanically connected to the radiating plate (12) and able to close the heating cable (13), the flexible support (15) and the thermally insulating layer (14) between itself and the radiating plate (12).

## Description

### Field of application

The present invention relates to an electric heating device and to a process for making an electric heating device, according to the preamble of the respective independent claims.

The subject electric heating device is intended to be advantageously used for room heating and in particular, for heating commercial or household rooms.

In particular, the present electric heating device is suitable for being hung on a support and in particular on a room wall for radiating heat into the same room.

Moreover, the subject electric heating device is particularly suitable for being a furnishing element.

Therefore, the present invention falls within the field of thermotecnical systems for commercial or household use and, in particular, it falls within the field of radiation heating devices.

### Prior art

Several electric radiation heating devices are currently known on the market.

A first one of such heating devices is described in German patent DE10124881 which discloses an electric radiation heating device consisting of a radiating plate of ceramic material, provided with a front face adapted to emit heat by radiation and a rear face on which a recess is obtained which has a coil trajectory.

Such first electric heating device comprises a heating cable housed in the above-mentioned recess and buried therein in a matrix of ceramic material. Such heating cable has the two terminals projecting outwards of the same radiating plate to be electrically connected to an electric supply source and/or to a further first electric heating device.

This first electric heating device has the drawback of being complex and therefore expensive to make, in particular since the manufacturing process thereof comprises a complex and burdensome step of obtaining the recess on the radiating plate according to a coil pattern. A further drawback of such first electric heating device consists in that it easily exhibits heating unevenness of the front face due to a poor thermal contact between the heating cable and the recess walls which occurs when part of said ceramic matrix penetrates between the heating cable and the walls of the same recess.

A further drawback of such first device therefore is that it is also difficult to make as it requires an accurate positioning of the cable in said recess for obtaining a close contact of the same cable with the recess walls in order to have an efficient heat conduction between cable and plate and in particular for limiting the infiltrations of the above-mentioned matrix of ceramic material between the heating cable and the recess walls. A second electric heating device described in international application WO2009/061113 comprises a frame able to be hung on a wall or on a vertical support and a heat radiating plate mechanically connected to the same frame.

This plate is of non ferrous metal material and has a ceramic cover on a front face thereof. In particular, this ceramic cover is connected to the plate by means of an adhesive layer.

Such second electric heating device comprises a heating cable fixed to the rear face of the above-mentioned plate, which heating cable is arranged on such rear face according to a coil pattern. In particular, such heating cable is fixed to the plate and kept in close contact therewith by means of an aluminium bi-adhesive tape.

Moreover, such second electric heating device comprises a layer of thermally insulating material and a glass wool layer. The thermally insulating material layer covers the rear face of the plate and also covers the heating cable fixed to such rear face. Such thermally insulating layer has the function of counteracting the dissipation of the part of heat generated by the heating cable which is not directly transmitted to the plate by conduction.

The glass wool layer covers the layer of thermally insulating material and has the function of keeping the latter in place on the rear face of the plate.

The frame of such second electric heating device is substantially frame-shaped and keeps the plate, the layer of thermally insulating material and the mineral wool layer stacked on each other.

The heating cable of such second device is a multilayer cable which comprises, from the inside outwards in a sequence, a copper wire braid core, a Teflon® layer, an insulating silicone layer, a heating wire helically wound on the insulating silicone layer and able to compensate for the magnetic field generated by the copper wire core when it is electrically supplied, a second Teflon® layer adapted to fix the heating wire into position, and a second insulating layer which covers the second Teflon® layer and is formed by extruding an insulating material such as synthetic rubber or silicone rubber. Such heating cable is arranged on the above-mentioned plate of the second heating device according to a coil substantially evenly distributed on the rear face of the same plate.

A drawback of such second electric heating device consists in that such heating cable, especially due to the overlapped layer structure, is poorly bending. In particular, such heating cable does not allow dense coils to be formed on the plate, therefore in order to obtain an average heating up to 70 °C of the front face of the plate it is necessary to provide such heating cable with a high power, in particular it is necessary to provide a power between 500 W and 1500 W.

Moreover, such second heating device is difficult to make since a high care and therefore long execution times are required for fixing the heating cable to the rear face of the plate according to a coil distributed as evenly as possible on the same rear face. An electric heating device is known from document DE-A-102005056382, comprising a radiating plate mechanically fixed to a frame on which a heating cable, adapted to transmit heat by conduction to the radiating plate, is fixed. A thermally insulating layer is mounted on the cable for counteracting heat dissipation. A closing cover resting onto the rear face of the radiating plate is provided.

Such device is complicated to make as it is not provided with suitable means for an easy fixing of the heating cable on the rear face of the plate. The even distribution of the cable and the optimal fixing thereof are important conditions to obtain a high efficiency. A further drawback of this device relates to the lack of waterproofing of the cable and of the device electronics against the external agents, and in particular water and humidity.

### Disclosure of the invention

In this situation, the problem underlying the present invention therefore is to obviate the above drawbacks by providing an electric heating device capable of heating a room mainly by radiation in a more efficient manner compared to the above-described heating devices.

An object of the present invention is to provide an electric heating device which requires less electric supply power for obtaining an equivalent heating effect compared to the above-described heating devices.

Another object of the present invention is to provide an electric heating device which is easier to make compared to the above-described heating devices.

Yet another object of the present invention is to provide a process for making an electric heating device which is easier compared to the process for making the heating devices described herein.

These and yet other objects are achieved by an electric heating device and a process for making an electric heating device, object of the present invention, according to the following claims.

### Brief description of the drawings

The technical features of the finding, according to the proposed objects, will appear clearly from the contents of the following claims and the advantages of the same will appear more clearly from the detailed description of a preferred but not exclusive embodiment of a process for making an electric heating device and of an electric heating device, according to the finding, shown by way of non-limiting example in the accompanying drawings, in which:
- figure 1 shows a detail of an electric heating device according to the present invention provided with a radiating plate, a heating cable, a flexible support of the heating cable, a layer of thermally insulating material and a rear cover, such detail being shown schematised a section view according to a plane perpendicular to the faces of the above-mentioned radiating plate;
- figure 2 shows a substantially plan view of the flexible support of the electric heating device of figure 1 with the above heating cable being sewn on a support face of the flexible support;
- figure 3 shows a detail of the flexible support of figure 2 having the heating cable sewn on the support face, not visible, according to the present invention;
- figure 4 shows a substantially plan view of the radiating plate of the electric heating device of figure 1 having a rear (visible) face and a front (not visible) face;
- figure 5 shows a substantially plan view of the radiating plate and of the layer of thermally insulating material of the electric heating device of figure 1, the layer of thermally insulating material covering the rear face of the radiating plate;
- figure 6 shows a substantially plan view of the cover of the electric heating device of figure 1 placed close to the radiating plate covered by the layer of thermally insulating material as shown in figure 5;
- figure 7 shows a perspective view of the cover of figure 6 seen from the back;
- figures 8 to 17 show schematic views of alternative arrangements of the heating cable on the flexible support.

### Detailed description of a preferred embodiment

With reference to the accompanying drawings, reference numeral 10 globally indicates an electric heating device.

Such electric heating device 10 is advantageously intended to be used for room heating and in particular for heating commercial or household rooms.

As described in more detail hereinafter, the electric heating device 10 is suitable for being hung on a support and in particular on a room wall for radiating heat into the same room.

Moreover, the subject electric heating device is especially suitable for being a furnishing element.

Structurally, the electric heating device 10 comprises a frame 11 able to be fixed to a support, a radiating plate 12 mechanically fixed to the frame 11, a heating cable 13 mechanically fixed to the radiating plate 12 for heating it.

The heating cable 13 is in close contact with the radiating plate 12 for heating it by heat conduction when it is electrically powered.

In more detail, the radiating plate 12 is equipped with a front face 12a and a rear face 12b. The front face 12a is intended to be oriented towards a room to heat or towards a particular area to heat in the same room, whereas the heating cable 13 is mechanically fixed on the rear face 12b for transmitting heat to the radiating plate 12 by heat conduction.

The front face 12a is advantageously able to be decorated, for example with painted or printed images, so that the electric heating device 10 is a furnishing element which can be fixed, for example, to a wall as a picture.

The electric heating device 10 further comprises at least one thermally insulating layer 14 covering the rear face 12b of the radiating plate 12, with the heating cable 13 arranged between such rear face 12b and the same thermally insulating layer 14 which is able to counteract heat dissipation from the heating cable 13 behind the radiating plate 12.

The thermally insulating layer 14 has the function of thermally insulating the rear face 12b of the radiating plate 12 and the heating cable 13 from the space behind the same radiating plate 12 so as to maximize the heat transmitted by the heating cable 13 to the radiating plate 12.

Preferably, the thermally insulating layer 14 consists of a closed cell foamed polymeric material.

According to the present invention, the electric heating device 10 also comprises a flexible support 15 having a support face 15a on which the heating cable 13 is mechanically fixed and uniformly distributed.

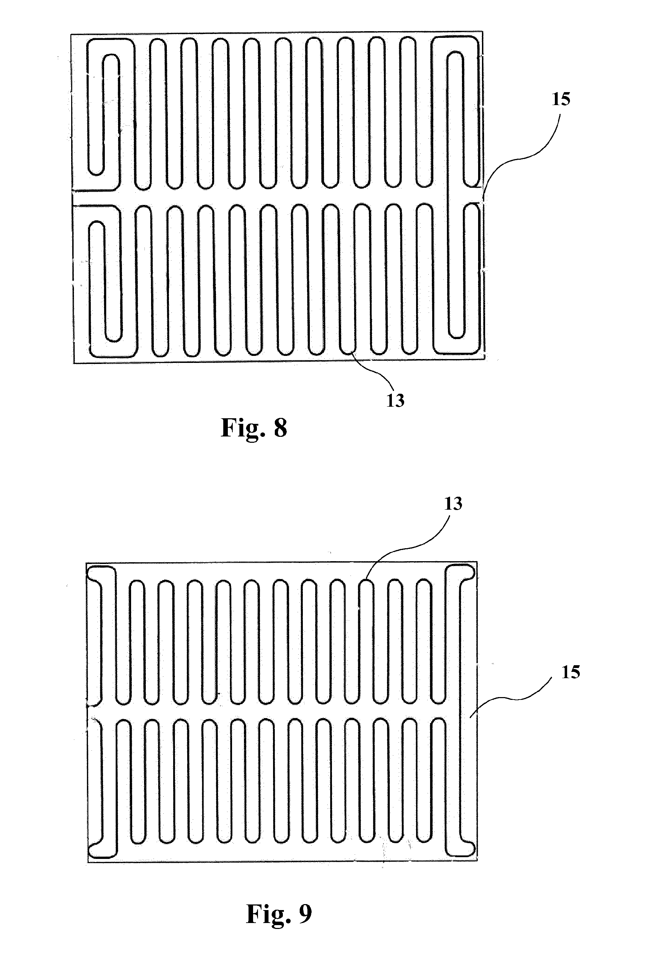

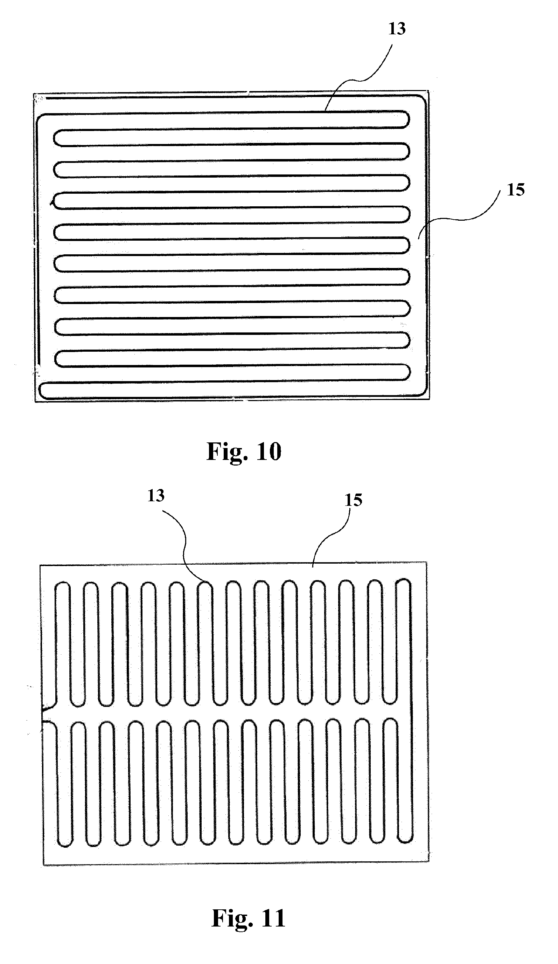

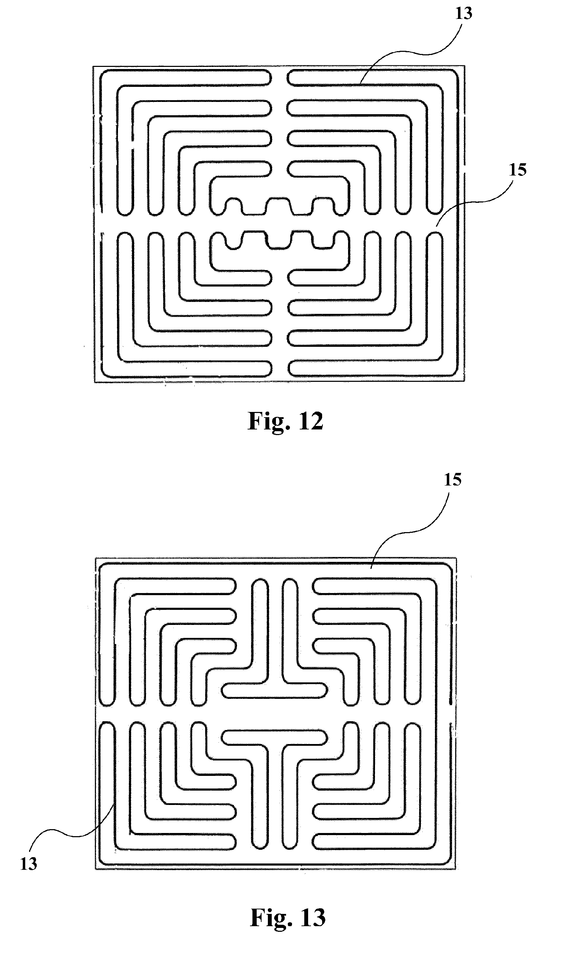

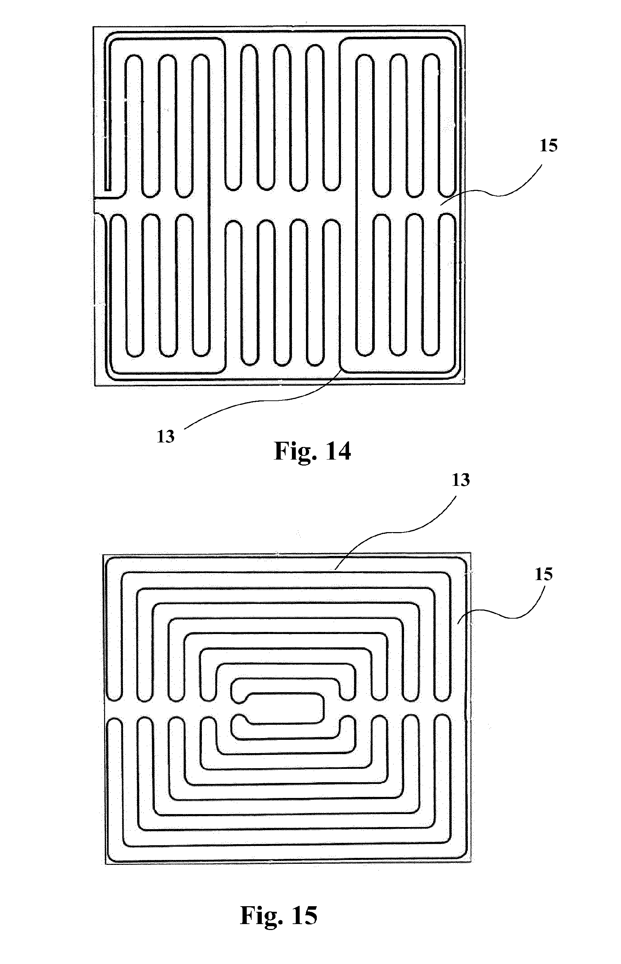

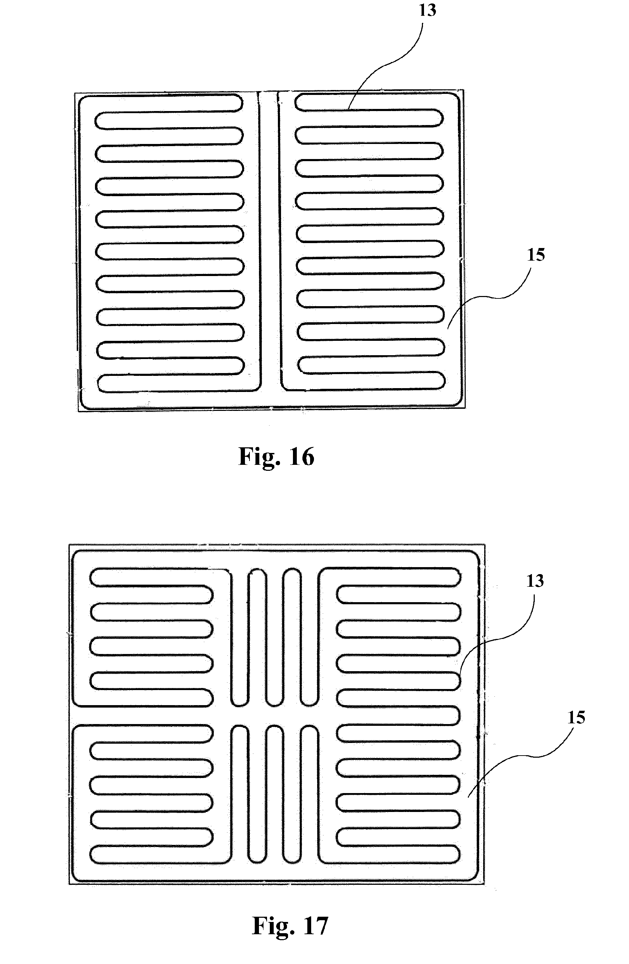

Figures 8 to 17 show, by way of a non-limiting example only, some schemes of preferred arrangements of the heating cable 13 on the flexible support 15, according to the present invention.

In general, the heating cable 13 is distributed uniformly organized onto the flexible support 15 of which it engages the support face 15a in a substantially uniform manner, i.e. so that parts of the flexible support 15 having the same area are engaged by stretches of the heating cable 13 having substantially the same length. In other words, advantageously, the ratio between the length of a stretch of heating cable 13 and the surface area of the portion of flexible support 15 engaged by such stretch of heating cable 13 is substantially constant along the entire extension of the flexible support 15. Preferably, the heating cable 13 is arranged to form a coil on the flexible support 15 and the turns of said coil have a pitch, i.e. a distance between two homogeneous stretches of consecutive turns, which is substantially equal to the thickness of the radiating plate 12, so that the temperature on the front surface 12a of the radiating plate 12 is substantially homogeneous during the operation of the electric heating device 10.

For example, in a preferred but non exclusive embodiment of the present invention in which the radiating plate 12 has a thickness substantially comprised between 10 mm and 30 mm, the turns of said coil have the above pitch advantageously of about 22 mm. The flexible support 15 advantageously has the support face 15a mechanically fixed to the rear face 12b of the radiating plate (12) with the heating cable 13 arranged therebetween for keeping the organised distribution of the heating cable 13 on the same radiating plate 12 steadily fixed.

In other words, the heating cable 13 is mechanically fixed distributed organised on the flexible support 15 and the latter, together with the heating cable 13, is mechanically fixed to the rear face 12b of the radiating plate 12 so that the flexible support 15 keeps the heating cable 13 fixed onto the radiating plate 12 and onto the latter substantially uniformly distributed for uniformly heating the front face 12a of the radiating plate 12. The flexible support 15 advantageously comprises at least one fabric layer, preferably of fibres of a plastic material resistant to the temperature at which the heating cable 13 must be heated to obtain a temperature of about 70 °C of the front face 12a of the radiating plate 12, during the operation of the electric heating device 10.

Moreover, the flexible support 15 advantageously also comprises a layer able to reflect the heat radiation emitted by the heating cable 13 preferably of aluminium.

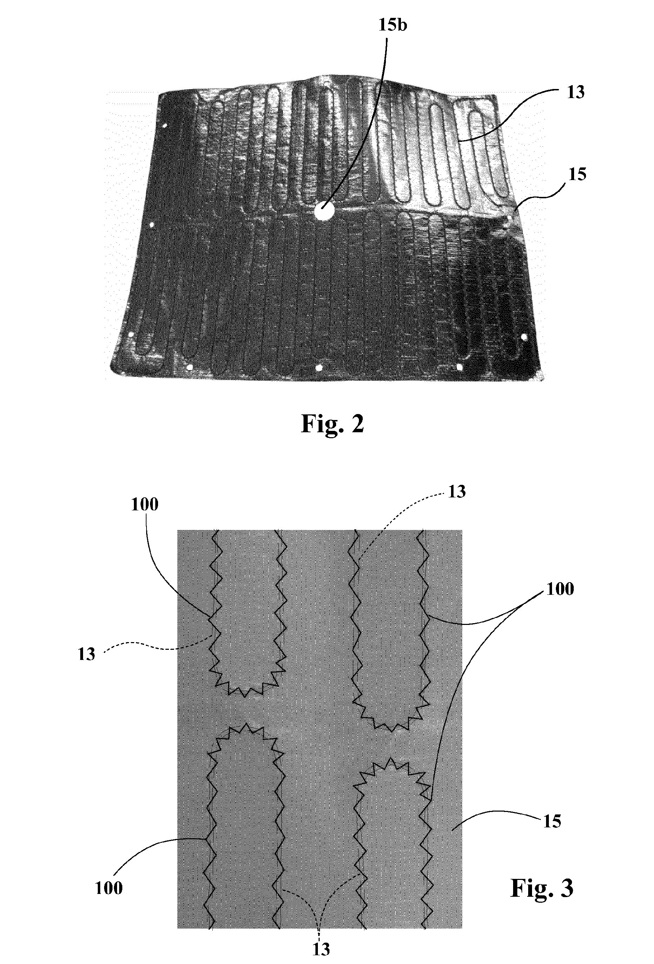

According to the exemplary and non limiting embodiment shown in figures 2 and 3, the heating cable 13 is advantageously sewn on the flexible support 15, for example by a seam 100, advantageously according to a zigzag pattern, with stitches arranged astride of the same heating cable 13.

During the manufacture of the electric heating device 10, the fixing of the heating cable 13 to the flexible support 15 by seam 100 according to the present invention is quick to carry out and allows a semi-finished product to be obtained, consisting of the flexible support 15 with the heating cable 13 sewn thereon, which semi-finished product is convenient to handle and easy to place on the rear face 12b of the radiating plate 12.

In particular, the electric heating device 10 advantageously comprises a bi-adhesive layer 17 sticking to the rear face 12b of the radiating plate 12, to the heating cable 13 and to the support face 15a of the flexible support 15.

Such bi-adhesive layer 17 is able to keep the heating cable 13 adhering to the radiating plate 12 in close contact and is preferably of a material having a high heat conductivity and/or has a thin thickness to allow an efficient heat conduction between the heating cable 13 and the radiating plate 12.

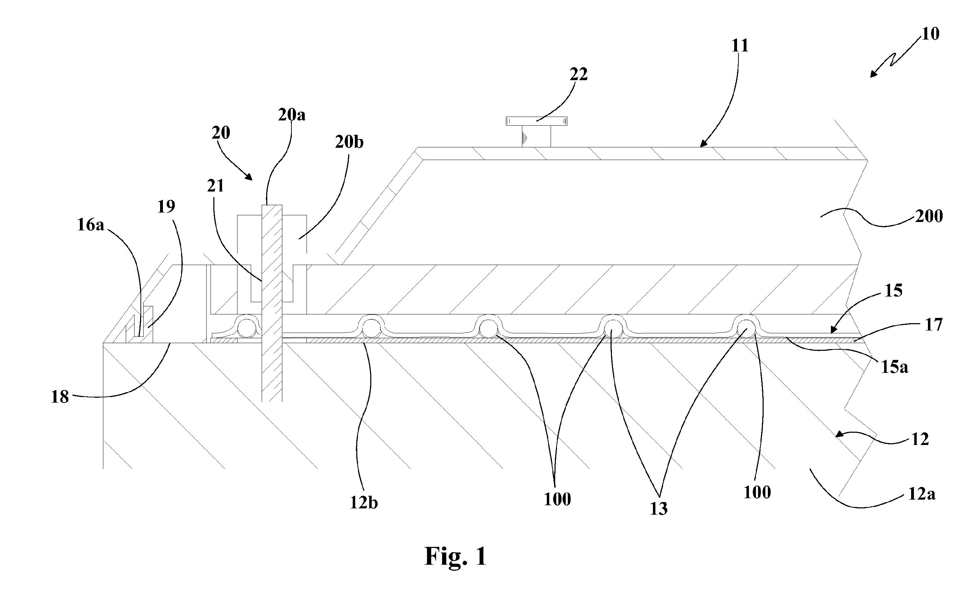

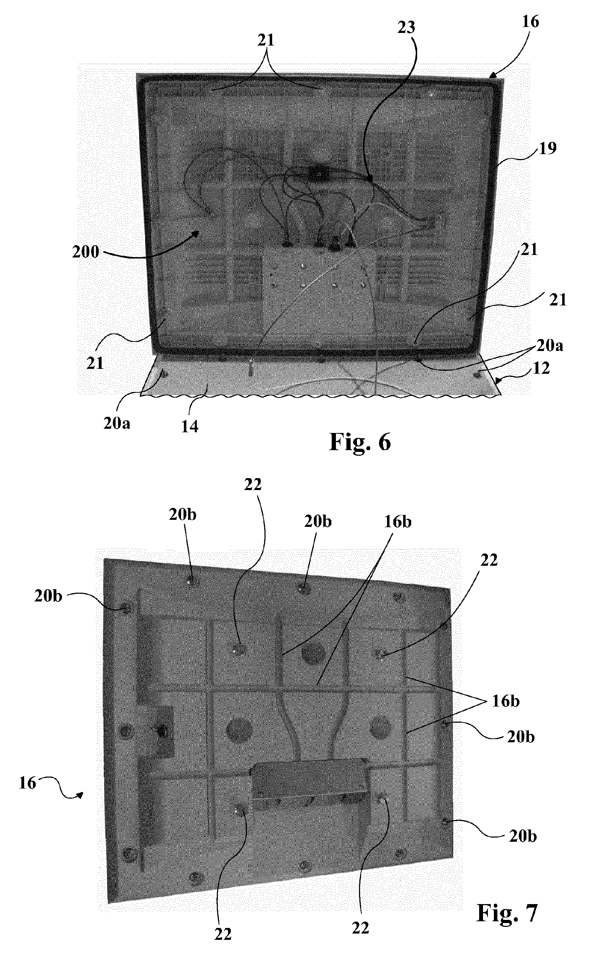

According to the present invention, the frame 11 of the electric heating device 10 comprises a cover 16 and, according to the preferred but non exclusive embodiment shown in figures 1, 6 and 7, the frame 11 preferably consists of the same cover 16. Cover 16 is mechanically sealed to the radiating plate 12 and is able to close between itself and the same radiating plate 12:
- the heating cable 13;
- the flexible support 15 and
- the thermally insulating layer 14,
for counteracting heat dissipation behind the radiating plate 12.

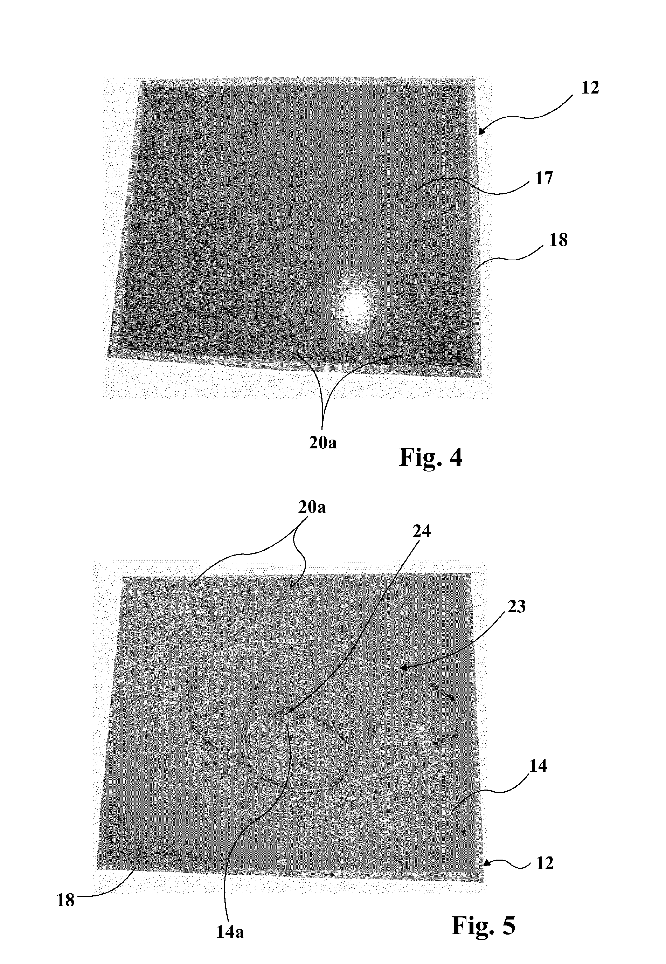

According to the embodiment shown by way of a non limiting example in figure 1 and in figures 4 to 7, cover 16 has a perimeter edge 16a fixed to a perimeter area 18 of the radiating plate 12. Preferably, the electric heating device 10 comprises an impermeable sealing gasket 19, advantageously of self-extinguishing polymeric material and preferably of elastomeric material, arranged between the perimeter edge 16a of cover 16 and the perimeter area 18 of the radiating plate 12 for impermeably sealing them to one another.

According to the above embodiment shown in figure 1 and in figures 4 to 7, the perimeter area 18 is advantageously defined by a perimeter edge band of the rear face 12b of the radiating plate 12.

Advantageously, the electric heating device 10 comprises mechanical connection means 20 able to connect the radiating plate 12 to cover 16.

Such mechanical connection means 20 preferably comprise screws 20a fixed to the radiating plate 12 (for example, such screws 20a have their head buried into the radiating plate 12) and projecting from the rear wall 12b of the same radiating plate 12, through seats 21 obtained through cover 16 and able to be passed through by screws 20a and nuts 20b able to be tightened onto screws 20a inserted into the through seats 21 of cover 16 for locking the latter to the radiating plate 12.

Advantageously, upon tightening nuts 20b onto screws 20a, with the latter inserted into the through seats 21, gasket 19 is compressed between the perimeter edge 16a of cover 16 and the perimeter area 18 of the radiating plate 12, defining a waterproof seal to prevent water infiltrations along the perimeter of the radiating plate 12, so that the electric heating device 10 may operate safely when it is installed for example in the proximity of a sink or in general, in a bathroom or other place where it may be impinged by water splashes.

Cover 16 is preferably provided also with rear openings, not shown in the annexed figures, able to let humidity escape from inside the same cover 16. Preferably. such rear openings are provided with a collar surrounding them and projecting behind cover 16 and which is able to prevent the entrance of water splashes into cover 16.

Moreover, cover 16 preferably has a shell structure, as shown by way of a non limiting example in figures 1, 6 and 7, and is advantageously provided with stiffening ribs 16b and is preferably made of plastic material.

The radiating plate 12 is preferably quadrangular, advantageously rectangular, in particular preferably it is a rectangular prism advantageously having dimensions of 50 cm by 60 cm with a thickness substantially comprised preferably between 2 cm and 3 cm. With such dimensions, the radiating plate can be easily handled and installed. Advantageously, the radiating plate is made from stone material, and preferably from marble or agglomerate, or it is preferably made from a glass or metal material having a high thermal capacity.

The heating cable 13 advantageously comprises, in a per se known manner and therefore not shown in the annexed figures, a core of electrically insulating and thermally stable material, at least one resistor element helically wound on such core and an electrically insulating sheath that encloses the core and the resistor element therein. Preferably, said core consists of a bundle or braid of glass fibres and moreover, in a preferred but non exclusive embodiment of the present invention, the heating cable 13 comprises two resistor elements wound or braided onto said core, preferably according to inverse helix so that each resistor element compensates the electromagnetic field produced by the other resistor element when such resistor elements are electrically powered.

In more detail, these two resistor elements are preferably flat, so that the overall diameter of the heating cable 13 is smaller than the diameter it would have if the above resistor elements had a circular section.

The above resistor elements preferably consist of a wire made from copper-nickel alloy (Cu-Ni) or equivalent metal alloy able to substantially have the same electrical resistance as the same copper-nickel alloy.

Thanks to the structure of the heating cable 13 (core with one or two resistive elements wound thereon), compared to the known multilayer cable (and described above) which generally has a diameter substantially comprised between 6 mm and 8 mm, the heating cable 13 has a much smaller diameter, substantially 2 mm or 2.5 mm which allows more heat transmission efficiency between the same heating cable 13 and the radiating plate 12.

Preferably, the heating cable 13 has an electrical resistance per unit of length substantially comprised between 21 Ohm/m and 22 Ohm/m, and advantageously the ratio between the length of the heating cable 13 and the area of the surface of the rear face 12b of the radiating plate 12 is substantially comprised between 0.0036 m/cm² and 0.004 m/cm² and in particular substantially equal to 0.00383 m/cm².

According to a preferred (but non exclusive) embodiment of the present invention, the electric heating device 10 has the radiating plate 12 which advantageously has the preferred dimensions of 50 mm by 60 mm with a thickness comprised between 10 mm and 30 mm and preferably of 25 mm, and 11.7 m of heating cable 13 which advantageously has a resistance by unit of length substantially equal to 21.5 Ohm/m. This preferred embodiment of the electric heating device 10 allows the front face 12a of the radiating plate 12 to be kept at a temperature substantially comprised between 65 °C and 75 °C with a consumption of about 207 W of power compared to a power comprised between 500 W and 1500 W used by the electric heating devices currently known for obtaining the same temperature of the face exposed to the room to be irradiated.

Preferably, the electric heating device 10 is able to be hung on a wall or on a vertical support and to this end, frame 11 advantageously comprises hooking means comprising mushroom-shaped elements 22 projecting behind cover 16 and a bracket, not shown, to be fixed to a wall or to a vertical support and advantageously provided with slots able to be engaged by the mushroom elements for steadily retaining the electric heating device 10 onto the above wall or vertical support.

The above slots are advantageously able to retain the mushroom-shaped elements 22 so as to counteract the accidental release thereof, for example the slots may be L-shaped. The electric heating device 10 preferably comprises also electric power means 23 electrically connected to the heating cable 13, for electrically powering it, and to electrical connectors able to connect the electric power means 23 to the mains and/or to a further electric heating device 10 preferably according to an electrical series configuration (so that the electric heating device 10 advantageously forms a modular element connectable to other electric heating devices 10 for obtaining a heat radiator). The electric connection means 22 are preferably mainly housed in an air space 200 defined inside cover 16, between the latter and the thermally insulating layer 14. Advantageously, the electric power means 23 comprise a thermostat 24 (preferably bimetallic thermostat) fixed to the rear wall 12b of the radiating plate 12 with which it is in thermal contact, advantageously at the centre of the same rear wall 12b.

Preferably, thermostat 24 is inserted through a first hole 14a obtained through the thermally insulating layer 14, and through a second hole 15b obtained through the flexible support 15.

Thermostat 24 is able to detect the temperature of the rear face 12b and to interrupt the electric supply of the heating cable 13 when said temperature value is exceeded by a safety threshold value, to prevent the temperature of the front face 12a of the radiating plate 12 from exceeding a limit temperature, preferably of 80 °C.

Advantageously, the electric power means 23 also comprise at least one fuse able to protect the same electric power means 23 and the heating cable 13 from possible undesired electric overvoltage.

The object of the present invention is also a process for making an electric heating device, by which process it is possible to obtain, in particular, the electric heating device 10 described above, the references of which are kept hereinafter for simplicity of description.

Such subject process comprises a step of mechanically fixing the heating cable 13 to the rear face 12b of the radiating plate 12, a step of covering the heating cable 13 and the rear face 12b with the thermally insulating layer 14 and a step of mechanically fixing the radiating plate 12 to frame 11.

According to the present invention, such step of mechanically fixing the radiating plate 12 to frame 11 comprises sealably fixing cover 16 of frame 11 to the radiating plate 12 with the heating cable 13 and the thermally insulating layer 14 arranged between cover 16 and the radiating plate 12.

Advantageously, said step of sealably fixing cover 16 to the radiating plate 12 preferably comprises tightening nuts 20b on screws 20a inserted in the through seats 21 of cover 16 for obtaining a simple and quick tightening of the electric heating device 10. Advantageously, during the tightening of nuts 20b on screws 20a inserted in the through seats 21 of cover 16, gasket 19 is compressed between the perimeter edge 16a of cover 16 and the perimeter area 18 of the radiating plate 12, defining a waterproof seal therebetween to prevent water infiltrations along the perimeter of the radiating plate 12. Moreover, still according to the present invention, said step of mechanically fixing the heating cable 13 to the rear face 12b of the radiating plate 12 comprises mechanically fixing the heating cable 13 in a uniformly distributed and organised manner on the flexible support 15 and then mechanically fixing the heating cable 13 together with the flexible support 15 to the rear face 12b of the radiating plate 12.

Preferably, the step of mechanically fixing the heating cable 13 in a uniformly distributed and organised manner on the flexible support 15 comprises a step of sewing the heating cable 13 on the flexible support 15 so that the flexible support 15 keeps the organised distribution of the heating cable fixed during the step of mechanically fixing the heating cable 13 to the rear face 12b of the radiating plate 12.

Then, a step of fixing the perimeter edge (16a) of the cover (16) to a perimeter area (18) of the radiating plate (12) is provided, with the impermeable sealing gasket (19) arranged between the perimeter edge (16a) of the cover (16) and the perimeter area (18) of the radiating plate (12).

A semi-finished product is obtained with such step of sewing the heating cable 13 on the flexible support 15, consisting of the flexible support (15) with the heating cable 13 sewn thereon which is convenient to handle and easy to be mechanically fixed to the rear face 12b of the radiating plate 12, advantageously by means of the bi-adhesive layer 17, for obtaining the assembly of the electric heating device 10 in a quick and easy manner.

In practice, it has been seen how the electric heating device 10 and the process for making a heating device, according to the present invention, achieve the intended task and objects.

Of course, in the practical embodiment thereof, it may also take shapes and configurations differing from what described above and shown in the accompanying drawings, without departing from the present scope of protection.

Moreover, all the parts may be replaced by technically equivalent ones and the sizes, shapes and materials used may be whatever according to the requirements, provided that they are compatible with the specific purpose.

## Claims

1. Electric heating device (10) comprising:
- a frame (11) able to be fixed to a support;
- a radiating plate (12) mechanically fixed to said frame (11) and equipped with a front face (12a) and a rear face (12b);
- at least one heating cable (13) mechanically fixed to the rear face (12b) of said radiating plate (12) to transmit heat to said radiating plate (12) by conduction;
- at least one thermally insulating layer (14) covering said rear face (12b), said at least one heating cable (13) being arranged between said at least one thermally insulating layer (14) and said radiating plate (12) and said at least one thermally insulating layer (14) being able to counteract the dissipation of heat from said at least one heating cable (13) behind said radiating plate (12);
- a flexible support (15) having a support face (15a) on which said at least one heating cable (13) is fixed mechanically distributed and uniformly organised, said flexible support (15) having said support face (15a) mechanically fixed to the rear face (12b) of said radiating plate (12);
- said frame (11) comprising a cover (16) sealably mechanically connected to said radiating plate (12) and able to close said at least one heating cable (13), said flexible support (15) and said at least one thermally insulating layer (14) between itself and said radiating plate (12);
**characterised in that** said cover (16) has a perimeter edge (16a) fixed to a perimeter area (18) of said radiating plate (12), and **in that** it comprises an impermeable sealing gasket (19) arranged between the perimeter edge (16a) of said cover (16) and the perimeter area (18) of said radiating plate (12).

2. Electric heating device (10) according to claim 1, **characterised in that** said at least one heating cable (13) is sewn onto said flexible support (15).

3. Electric heating device (10) according to any one of the previous claims, **characterised in that** said flexible support (15) comprises at least one layer of fabric.

4. Electric heating device (10) according to any one of the previous claims, **characterised in that** said flexible support (15) comprises at least one layer able to reflect the heat radiation emitted by said at least one heating cable (13).

5. Electric heating device (10) according to any one of the previous claims, **characterised in that** it comprises a bi-adhesive layer (17) sticking to the rear face (12b) of said radiating plate (12), to said at least one heating cable (13) and to said flexible support (15).

6. Electric heating device (10) according to any one of the previous claims, **characterised in that** said cover (16) has rear openings able to allow humidity to escape from inside said cover (16) itself.

7. Electric heating device (10) according to any one of the previous claims, **characterised in that** said radiating plate (12) is made from stone material and has a thickness substantially of between 10 mm and 30 mm.

8. Electric heating device (10) according to any one of the previous claims, **characterised in that** said at least one heating cable (13) has an electric resistance per unit length substantially between 21 Ohm/m and 22 Ohm/m.

9. Electric heating device (10) according to claim 8, **characterised in that** the ratio between the length of said at least one heating cable (13) and the area of the surface of the rear face (12b) of said radiating plate (12) is substantially between 0.0036 m/cm² and 0.004 m/cm² and particularly substantially equal to 0.00383 m/cm².

10. Electric heating device (10) according to claim 9, **characterised in that**:
- said radiating plate (12) has dimensions of 50 mm by 60 mm with a thickness of between 10 mm and 30 mm and preferably 25 mm;
- said at least one heating cable (13) is substantially 11.7 m in length and has a resistance per unit length substantially equal to 21.5 Ohm/m.

11. Process for making an electric heating device (10) according to any one of the previous claims, comprising:
- a step of mechanically fixing said at least one heating cable (13) to the rear face (12b) of said radiating plate (12);
- a step of covering said at least one heating cable (13) and said rear face (12b) with said at least one thermally insulating layer (14);
- a step of mechanically fixing said radiating plate (12) to said frame;
**characterised in that**:
- said step of mechanically fixing said radiating plate (12) to said frame comprises fixing said cover (16) to said radiating plate (12) with said at least one heating cable (13) and said at least one thermally insulating layer (14) arranged between said cover (16) and said radiating plate (12);
- and **in that** said step of mechanically fixing said at least one heating cable (13) to the rear face (12b) of said radiating plate (12) comprises mechanically fixing said at least one heating cable (13) in a uniformly distributed and organised manner on said flexible support (15) and then mechanically fixing said at least one heating cable (13) together with said flexible support (15) to the rear face (12b) of said radiating plate (12);
a step of fixing a perimeter edge (16a) of said cover (16) to a perimeter area (18) of said radiating plate (12), with an impermeable sealing gasket (19) arranged between the perimeter edge (16a) of said cover (16) and the perimeter area (18) of said radiating plate (12).

12. Process for making an electric heating device (10) according to claim 11, **characterised in that** said step of mechanically fixing said at least one heating cable (13) in a uniformly distributed and organised manner on said flexible support (15) comprises a step of sewing said at least one heating cable (13) onto said flexible support (15).
